# FASCICULE DE BREVET EUROPEEN

(11) **EP 2 677 708 B1**
(45) Date de publication et mention de la délivrance du brevet: **18.12.2019**
(21) Numéro de dépôt: 13173166.3
(22) Date de dépôt: 21.06.2013
(51) Int. Cl.: H04L 12/58

(54) **Procédé de communication d'un message audiovisuel, et système de communication**
Kommunikationsverfahren einer audiovisuellen Nachricht, und entsprechendes Kommunikationssystem
Communication method of an audiovisual message, and communication system

(30) Priorité: 21.06.2012 FR 1255863
(43) Date de publication de la demande: 25.12.2013
(73) Titulaire: Orange, 75015 Paris (FR)
(72) Inventeur: Moncomble, Ghislain, 22300 LANNION (FR); Julien, Jean-Pierre, 22700 LOUANNEC (FR)
(74) Mandataire: Regimbeau

(56) Documents cités:
- EP-A1- 1 126 721
- WO-A2-03/030023
- FR-A1- 2 839 598
- US-A1- 2003 016 658
- US-A1- 2006 195 505
- US-A1- 2009 049 495

## Description

### DOMAINE TECHNIQUE GENERAL

L'invention concerne un procédé de transmission et un procédé de réception d'un message audio ou audiovisuel enrichi. L'invention concerne également des dispositifs et terminaux de transmission et/ou de réception, ainsi que des serveurs.

### ETAT DE L'ART

Dans de nombreux systèmes de communication, il est nécessaire de transmettre des messages audio ou audiovisuels, accompagnés d'informations d'enrichissement, comme par exemple des informations textuelles. Ceci est par exemple utile dans les systèmes de messagerie vocale des opérateurs de téléphonie mobile.

Il est connu depuis plus d'un siècle de transmettre des informations textuelles sous forme audio à l'aide de différents codages, comme par exemple via l'alphabet morse. Toutefois, ces solutions ne sont plus adaptées aux besoins modernes, comme par exemple la transmission de messages vocaux sur des terminaux de téléphonie mobile.

De nos jours, lorsqu'un utilisateur de téléphonie mobile dépose un message vocal dans la messagerie vocale d'un autre utilisateur, il peut accompagner son message d'informations textuelles comme une adresse Internet, en prononçant le nom de l'adresse dans son message à l'intention du destinataire.

Cette solution présente plusieurs inconvénients. D'une part, cette information textuelle, dictée dans le message vocal, rallonge et perturbe le message vocal. En outre, des risques de confusion sur la nature exacte de l'information textuelle peuvent exister, comme par exemple sur l'orthographe exacte de l'adresse.

Pour pallier partiellement ces inconvénients, il est connu, dans les systèmes de communication des opérateurs de téléphonie, de rajouter dans la base de données adjacente à chaque message vocal une nouvelle rubrique permettant de stocker des informations textuelles. Le système de communication comprend alors des moyens permettant de rajouter des informations textuelles parallèlement au dépôt du message vocal, pour les stocker dans cette nouvelle rubrique.

Lorsqu'un utilisateur écoute ses messages vocaux sur son terminal, des moyens de lecture affichent, simultanément au message vocal, les informations textuelles liées au message vocal.

Des technologies similaires existent pour la diffusion d'informations textuelles simultanément à la diffusion de messages radios ou télédiffusés, et pour l'interprétation de ces informations lors de leur réception, comme par exemple dans le brevet FR 2839598.

Toutefois, ces solutions nécessitent des adaptations conséquentes au niveau des infrastructures des systèmes de communication. Par exemple, dans le document US 2006/0195505 A1 un procédé pour insérer au moins un élément multimédia dans un message multimédia est divulgué.

Par exemple, au niveau d'un serveur de messagerie vocale, il est nécessaire de modifier les bases de données et le fonctionnement des différents serveurs de messagerie vocale utilisés par chacun des différents opérateurs sur leurs différents réseaux et pays, ce qui est long et coûteux.

### PRESENTATION DE L'INVENTION

L'invention propose de pallier les inconvénients précités.

A cet effet, l'invention propose un procédé de transmission d'un message audio ou audiovisuel enrichi mis en œuvre par un dispositif de transmission, caractérisé en ce qu'il comprend les étapes consistant à :
- convertir des informations d'enrichissement, destinées à enrichir le contenu d'un message initial audio ou audiovisuel, et des informations de traitement associées aux informations d'enrichissement, en au moins un message multimédia d'insertion,
- insérer le message multimédia d'insertion au moins dans le contenu audio ou visuel du message initial, de sorte à créer un message enrichi,
- transmettre, par un système de communication, le message enrichi, du dispositif de transmission vers au moins un dispositif de réception.

L'invention permet de transmettre des messages audio ou audiovisuels, accompagnés d'informations d'enrichissement, tout en évitant la nécessité de modifier en profondeur les infrastructures des systèmes de communication. Une grande variété d'informations d'enrichissement peut être transmise, sans qu'il soit nécessaire de complexifier les systèmes de communication existants.

Selon un mode de réalisation, une information de traitement transmise par le système de communication est codée selon un code audio ou visuel associé au contenu de ladite information de traitement. L'incorporation des informations est donc transparente pour l'utilisateur, qui n'a aucune action supplémentaire de traitement à effectuer. En outre, le traitement ultérieur des informations de traitement par un dispositif de réception est facilité.

Selon un mode de réalisation, l'insertion du message multimédia d'insertion dans un contenu audio ou visuel du message audio ou audiovisuel initial comprend l'insertion d'au moins une balise audio ou visuelle de séparation entre le message multimédia d'insertion et le contenu audio ou visuel du message audio ou audiovisuel initial. Le traitement ultérieur du message enrichi par le dispositif de réception est ainsi amélioré et facilité, ce qui permet de réduire les temps et les ressources de traitement.

Selon un mode de réalisation, le message enrichi transmis par le dispositif de transmission comprend une succession ordonnée prédéfinie d'informations de traitement et d'informations d'enrichissement. Le traitement ultérieur du message enrichi par le dispositif de réception est également amélioré et facilité.

L'invention concerne également un procédé de réception d'un message audio ou audiovisuel enrichi mis en œuvre par un dispositif de réception, comprenant les caractéristiques de la revendication 1.

L'invention permet d'introduire de nouvelles fonctionnalités dans les échanges de messages et notamment dans l'utilisation de ces messages dans le système de communication, sans avoir à changer les infrastructures du système de communication.

L'invention permet de traiter des informations d'enrichissement d'un message audiovisuel, de façon transparente pour l'utilisateur, c'est-à-dire que celui-ci n'a aucune action supplémentaire de traitement à effectuer, et que le traitement mis en place n'est pas apparent pour l'utilisateur. Selon un mode de réalisation, les informations de traitement comprennent :
- des informations sur la catégorie d'informations d'enrichissement transmises dans le message audiovisuel enrichi,
- des informations de paramétrage de l'affichage des informations d'enrichissement à effectuer au niveau du terminal de réception.

Ce type d'informations permet de faciliter le traitement au niveau du dispositif de réception, et de réduire les temps de traitement et le volume de données à transférer.

Selon un mode de réalisation, les informations d'enrichissement comprennent un lien vers une adresse accessible via un réseau de communication.

Selon un mode de réalisation, l'extraction du message multimédia d'insertion depuis un contenu audio ou visuel du message audio ou audiovisuel enrichi comprend l'extraction d'au moins une balise audio ou visuelle de séparation entre le message multimédia d'insertion et le contenu audio ou visuel du message audio ou audiovisuel initial.

Selon un mode de réalisation, le message enrichi reçu par le dispositif de réception comprend une succession ordonnée prédéfinie d'informations de traitement et d'informations d'enrichissement.

Le traitement du message enrichi par le dispositif de réception est ainsi amélioré et facilité, ce qui permet de réduire les temps et les ressources de traitement.

L'invention concerne également un dispositif de transmission d'un message audio ou audiovisuel enrichi, caractérisé en ce qu'il comprend:
- des moyens de conversion, configurés pour convertir
   ∘ des informations d'enrichissement, destinées à enrichir le contenu d'un message initial audio ou audiovisuel, et
   ∘ des informations de traitement associées aux informations d'enrichissement,
      en au moins un message multimédia d'insertion,
- des moyens de traitement, configurés pour insérer le message multimédia d'insertion au moins dans le contenu audio ou visuel du message initial, de sorte à créer un message enrichi,
- des moyens de communication, configurés pour transmettre le message enrichi, vers au moins un terminal de réception.

L'invention concerne également un serveur comprenant un tel dispositif.

L'invention concerne également un dispositif de réception d'un message audio ou audiovisuel enrichi, comprenant les caractéristiques de la revendication 7.

L'invention concerne également comprenant un dispositif de transmission et/ou de réception tels que décrits précédemment.

L'invention concerne également un programme d'ordinateur comportant des instructions pour l'exécution du procédé de transmission et/ou du procédé de réception, lorsque le programme est exécuté par un processeur.

L'invention concerne également un support d'enregistrement lisible par un processeur sur lequel est enregistré un programme comportant des instructions pour l'exécution du procédé de transmission et/ou du procédé de réception.

L'invention s'applique à différents types de systèmes de communication, et notamment aux systèmes de communication par téléphonie mobile, en particulier aux serveurs de messagerie vocale.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la Figure 1 est une représentation d'un mode de réalisation d'un dispositif de transmission selon l'invention ;
- la Figure 2 est une représentation d'un mode de réalisation d'un dispositif de réception selon l'invention ;
- la Figure 3 est une représentation d'un mode de réalisation d'un procédé de communication selon l'invention ;
- la Figure 4 est une représentation d'un mode de réalisation d'un procédé de transmission selon l'invention ;
- la Figure 5 est une représentation d'un mode de réalisation d'un procédé de réception selon l'invention ;
- la Figure 6 est une représentation d'un mode de réalisation d'un enrichissement d'un message initial audio.

### DESCRIPTION DETAILLEE

### Systèmes et dispositifs de communication

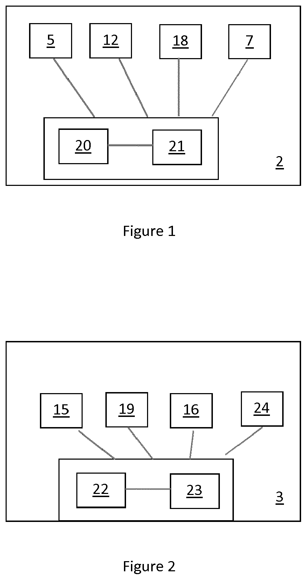

Les Figures 1 à 3 représentent de manière schématique différents dispositifs de communication pour la mise en œuvre des différents procédés de communication décrits ci-après.

La Figure 1 est une représentation schématique d'un dispositif 2 de transmission d'un message audio ou audiovisuel enrichi.

Le dispositif 2 comprend des moyens 5 de conversion. Ces moyens 5 de conversion sont configurés pour convertir des informations 8 d'enrichissement, destinées à enrichir le contenu d'un message 10 initial audio ou audiovisuel comprenant au moins un contenu audio, et des informations 9 de traitement associées aux informations 8 d'enrichissement, en au moins un message 11 multimédia d'insertion, comme explicité par la suite.

Le dispositif 2 comprend également des moyens 6 d'insertion, configurés pour insérer le message 11 multimédia d'insertion au moins dans le contenu audio ou visuel du message 10 initial, de sorte à créer un message 12 enrichi.

Le dispositif 2 comprend en outre des moyens 7 de communication, configurés pour transmettre le message 12 enrichi, vers au moins un terminal 4 de réception. Ces moyens 7 de communication sont classiques, et dépendent du type de communication utilisée (réseau, Bluetooth, Internet, etc.).

Le cas échéant, le dispositif 2 de transmission comprend des moyens 18 d'interaction avec un utilisateur (par exemple de type clavier, interface, écran, etc.).

Les différents moyens du dispositif peuvent notamment comprendre un ou plusieurs processeurs 20, associés à au moins une mémoire 21 stockant un programme d'ordinateur, pour l'exécution des tâches mises en œuvre par ces moyens. Ce processeur et cette mémoire peuvent être communs à ces différents moyens, ou non.

La Figure 2 est une représentation schématique d'un dispositif 3 de réception d'un message audio ou audiovisuel enrichi 12.

Ce dispositif comprend des moyens 15 d'extraction. Ces moyens sont configurés pour extraire du message 12 enrichi reçu au moins un message multimédia d'insertion 11 contenant des informations 8 d'enrichissement et des informations 9 de traitement, et un message audio ou audiovisuel initial 10.

Le dispositif 3 comprend également des moyens 24 de lecture. Ces moyens sont configurés pour lire le message audio ou audiovisuel initial.

Le dispositif 3 comprend des moyens 16 de traitement, configurés pour traiter les informations 8 d'enrichissement, de sorte à enrichir la lecture ou la présentation du message 10 audio ou audiovisuel initial avec lesdites informations 8 d'enrichissement, le traitement des informations 8 d'enrichissement étant déterminé en fonction des informations 9 de traitement contenues dans le message multimédia d'insertion 11.

Les moyens 24 de lecture comprennent des éléments de restitution du message à lire, par exemple de type écran ou haut-parleurs.

Le dispositif 3 comprend des moyens 19 de communication, similaires aux moyens 7 précités.

Le dispositif 3 comprend également, le cas échéant, des moyens d'interaction avec un utilisateur (clavier, interface...), similaires aux moyens 18 précités.

Les différents moyens du dispositif peuvent notamment être comprendre un ou plusieurs processeurs 22, associés à au moins une mémoire 23 stockant un programme d'ordinateur, pour l'exécution des tâches mises en œuvre par ces moyens.

Dans un mode de réalisation, le dispositif 2 de transmission est intégré dans un terminal. De même, le dispositif 3 de réception est intégré dans un terminal. Un même terminal peut comprendre à la fois un dispositif 2 de transmission et un dispositif 3 de réception.

Il peut par exemple s'agir de terminaux de téléphonie mobile, ou d'ordinateurs, ou de téléviseurs ou serveurs de télévision, ou de radios ou serveurs radio, ou de serveurs de messagerie audio ou audiovisuelles, ou tout autre dispositif de communication adapté.

Les différents moyens décrits peuvent être localisés directement sur le terminal, si celui dispose des capacités de traitement, voire de mémoire, nécessaires, ou bien être accessibles, par exemple à l'aide de requêtes en mode client-serveur, à partir d'un serveur localisé quelque part dans le réseau de communication.

Dans un mode de réalisation, le dispositif de transmission fait partie d'un serveur, par exemple de type ordinateur.

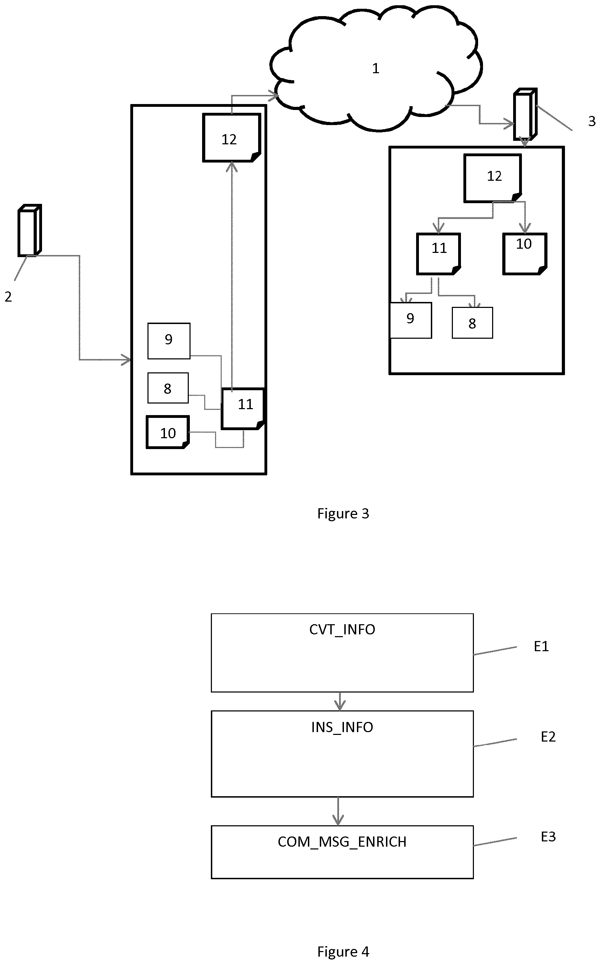

Dans un mode de réalisation, schématisé en Figure 3, le dispositif 2 de transmission et de 3 réception communiquent par l'intermédiaire d'un système 1 de communication. Le système 1 de communication dépend des applications : réseau Internet, système de téléphonie mobile, système de communication par Bluetooth, etc.

L'invention concerne également un programme d'ordinateur comportant des instructions pour l'exécution du procédé de transmission et/ou du procédé de réception tels que décrits par la suite, lorsque le programme est exécuté par un processeur. Ce programme peut notamment être stocké dans une mémoire du dispositif de transmission et/ou de réception.

De même, l'invention concerne également un support d'enregistrement lisible par un processeur sur lequel est enregistré un programme comportant des instructions pour l'exécution du procédé de transmission et/ou du procédé de réception tels que décrits par la suite.

### Procédé de transmission

On a représenté en Figures 3 et 4 un mode de réalisation d'un procédé de transmission d'un message audio ou audiovisuel entre un dispositif 2 d'émission et un dispositif 3 de réception, par un système 1 de communication. Ces dispositifs sont intégrés dans des terminaux d'émission et de réception.

On entend par message audio ou audiovisuel un message comprenant au moins un contenu audio, comme par exemple un message vocal. Ce message peut, le cas échéant, mais non nécessairement, comprendre également des informations visuelles, statiques (images/photos...) ou dynamiques (vidéos...), ce qui correspond au terme « message audiovisuel ».

On décrit à présent des étapes d'un mode de réalisation du procédé de transmission. Différents modes de réalisation seront décrits par la suite.

Une première étape E1 consiste à convertir des informations 8 d'enrichissement, destinées à enrichir le contenu d'un message 10 initial audio ou audiovisuel, ou encore à modifier ou enrichir sa future présentation sur le terminal du destinataire, et des informations 9 de traitement associées aux informations 8 d'enrichissement, en au moins un message 11 multimédia d'insertion. Comme décrit par la suite, le message 11 multimédia comprend un contenu audio d'insertion, accompagné le cas échéant d'un contenu visuel (photo, vidéo...) d'insertion. Dans un mode de réalisation, seules des informations 9 de traitement sont converties.

Par convertir, on entend que tout ou une partie des informations doivent être transférées dans un format prédéfini. Certaines informations 9 d'enrichissement n'ont toutefois pas nécessairement besoin d'être converties, notamment si celles-ci sont directement fournies dans le format permettant leur insertion ultérieure (étape E2).

Les informations 8 d'enrichissement sont par exemple des informations textuelles, destinées à enrichir le message 10 initial lors de sa lecture par le dispositif 3 de réception.

Les informations 9 de traitement permettent de caractériser le traitement (synchronisation, nature de l'affichage, ouvertures d'adresses Internet, etc.) des informations 8 d'enrichissement, à effectuer lors de la lecture du message 10 initial par le dispositif 3 de réception.

La première étape E1 est réalisée par les moyens 5 de conversion, décrits précédemment. Ces moyens 5 de conversion sont intégrés dans le dispositif 2 d'émission, et/ou dans une unité de traitement externe.

Une deuxième étape E2 consiste à insérer chaque message 11 multimédia d'insertion au moins dans le contenu audio du message 10 initial, de sorte à créer un message 12 audio ou audiovisuel enrichi, appelé message enrichi pour la suite de la description

Cette étape est réalisée par les moyens 6 d'insertion précités, qui peuvent être intégrés dans le dispositif 2 d'émission, et/ou dans une unité de traitement externe.

Une troisième étape E3 consiste à transmettre, par le système 1 de communication, le message 12 enrichi, du dispositif 2 d'émission vers au moins un dispositif 3 de réception.

Cette étape est réalisée par les moyens 7 de communication en collaboration avec le système 1 de communication.

Selon un mode particulier de réalisation de l'invention, le message 12 enrichi transite via un serveur de messagerie par exemple vocale.

### Procédé de réception

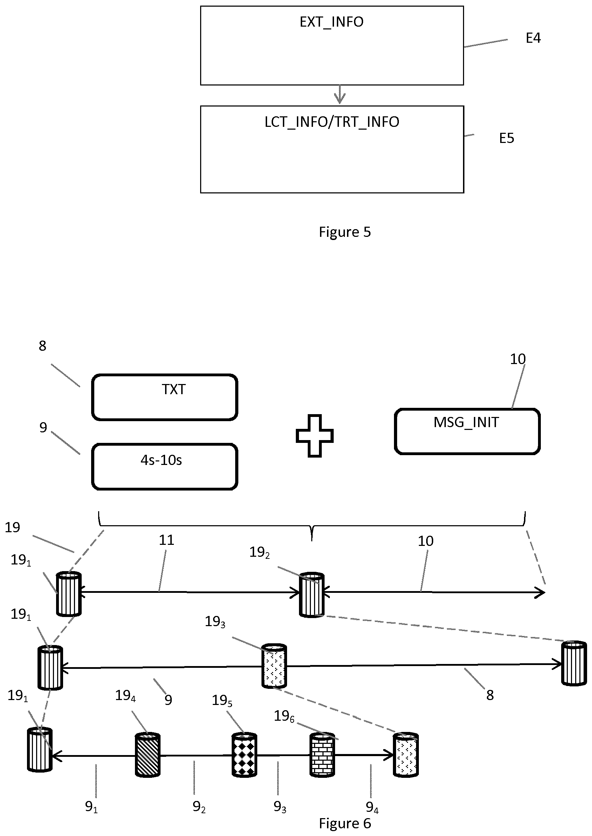

On décrit à présent un procédé de réception d'un message audio ou audiovisuel enrichi 12 mis en œuvre par le dispositif 3 de réception, en référence aux Figures 3 et 5.

Une étape E4 consiste à extraire du message 12 enrichi reçu au moins un message multimédia d'insertion 11 contenant des informations 8 d'enrichissement et des informations 9 de traitement, et un message audio ou audiovisuel initial 10.

Cette extraction permet au dispositif 3 de réception de récupérer d'une part, le message 10 audio ou audiovisuel initial, et d'autre part, les informations 8, 9 d'enrichissement et de traitement. Ainsi, lors de cette extraction, les informations 8 d'enrichissement et les informations 9 de traitement sont extraites, puis supprimées du message 10 initial.

Cette étape E4 est réalisée par les moyens 15 d'extraction, qui peuvent être intégrés dans le dispositif 3 de réception, et/ou dans une unité de traitement externe.

Une étape E5 consiste à lire le message 10 audio ou audiovisuel initial au niveau du dispositif 3 de réception et, à traiter les informations 8 d'enrichissement, de sorte à enrichir ou améliorer la lecture ou la présentation du message 10 audio ou audiovisuel initial avec lesdites informations 8 d'enrichissement.

La lecture du message 10 initial est réalisée par les moyens 24 de lecture.

Les moyens 16 de traitement, présents dans le dispositif 3 de réception, et/ou dans une unité de traitement externe, mettent par exemple en œuvre une lecture des informations 8 d'enrichissement, de manière simultanée avec la lecture du message 10 audio ou audiovisuel initial.

Selon un autre mode particulier de réalisation de l'invention, les moyens 16 de traitement permettent un affichage différencié des différentes séquences composant le message audio ou audiovisuel initial, par exemple dans le cas de messages composés, issus par exemple d'une succession de messages et réponses sur messages.

Le traitement des informations 8 d'enrichissement est exécuté en fonction des informations 9 de traitement extraites du message 12 enrichi, et associées aux informations 8 d'enrichissement. Ces informations 9 de traitement permettent par exemple, mais non limitativement, de définir la nature de la lecture ou de l'affichage des informations 8 d'enrichissement, la durée de cet affichage, leur synchronisation avec le message 10 audio ou audiovisuel initial, etc.

Par exemple, des informations 8 d'enrichissement de type textuelles sont affichées simultanément au message 10 audio ou audiovisuel initial, comme par exemple des sous-titres textuels d'un message vocal, l'affichage étant géré par les moyens 16 de traitement grâce aux informations de traitement. Selon un autre exemple, l'enrichissement peut être aussi une photo ou une vidéo qui peut être affichée directement, à partir de son URL (pour Uniform Resource Locator en anglais) fournie dans les informations d'enrichissement, et d'un traitement prédéfini d'affichage. De multiples autres exemples sont bien entendu possibles.

Dans le cas où les informations 8 d'enrichissement comprennent en outre des informations visuelles statiques ou dynamiques, par exemple des images, photos, ou des vidéos, et que le message 10 initial est un message audiovisuel, le procédé comprend les étapes suivantes.

Une étape E1 de conversion consiste à convertir les informations 8 d'enrichissement, et les informations 9 de traitement associées aux informations 8 d'enrichissement, en un message 11 multimédia d'insertion.

Une deuxième étape E2 consiste à insérer le message 11 multimédia d'insertion dans le contenu audio et vidéo du message 10 audiovisuel initial, de sorte à créer un message 12 enrichi.

Par exemple, si l'information 8 d'enrichissement est une vidéo avec du son, les moyens 5 de conversion convertissent cette information 8 d'enrichissement et les informations 9 de traitement associées en un message 11 multimédia (audiovisuel) d'insertion, qui comprend à la fois un contenu vidéo d'insertion et un contenu audio d'insertion.

Le contenu vidéo d'insertion comprend le contenu vidéo de l'information d'enrichissement. Un contenu audio d'insertion peut comprendre le contenu audio de l'information d'enrichissement et le contenu audio codant les informations 9 de traitement.

Le contenu vidéo d'insertion est inséré dans le contenu vidéo du message 10 audiovisuel initial, et le contenu audio d'insertion est inséré dans le contenu audio du message 10 audiovisuel initial.

L'information d'enrichissement peut également être une ou plusieurs images statiques, accompagnées d'un contenu audio.

L'information d'enrichissement peut également être une ou plusieurs images statiques, sans contenu audio.

Une troisième étape E3 consiste à communiquer, par le système 1 de communication, le message 12 enrichi, d'un dispositif 2 d'émission vers au moins un dispositif 3 de réception.

Une quatrième étape E4 consiste à extraire les informations d'enrichissement et les informations de traitement du message audiovisuel enrichi reçu par le dispositif de réception.

Au niveau du dispositif de réception, une cinquième étape E5 consiste à lire le message audiovisuel initial, et, simultanément, traiter les informations d'enrichissement, de sorte à enrichir la lecture du message audiovisuel initial avec les informations d'enrichissement, le traitement des informations d'enrichissement étant déterminé en fonction des informations de traitement extraites du message enrichi, et associées aux informations d'enrichissement.

Par exemple, une vidéo comprenant du son (information d'enrichissement) est lue simultanément à un message audiovisuel initial.

On décrit à présent différents modes de réalisation de différentes étapes des procédés de transmission et de réception.

### Informations d'enrichissement et de traitement

Les informations 8 d'enrichissement peuvent notamment être fournies manuellement par un utilisateur, via les moyens 18 d'interaction, présents par exemple sur son dispositif de transmission ou terminal.

Selon une alternative, les informations 8 d'enrichissement ne sont pas fournies manuellement par un utilisateur, mais agrégées automatiquement à partir d'une base de données accessible via le système 1 de communication, ou générées à partir d'une application présente sur le dispositif ou terminal.

Le dispositif ou terminal se connecte à la base de données via ses moyens 7 de communication ou télécharge via le système de communication ces informations 8 d'enrichissement.

Par exemple, un annonceur publicitaire publie un message audio initial qu'il souhaite diffuser vers des terminaux (télévisions, téléphones, etc.), et des informations 8 d'enrichissement de ce message audio (informations visuelles sur les produits, prix à afficher, plan d'accès, etc.).

Dans un autre exemple de réalisation, les messages 10 audio initiaux sont des messages vocaux d'utilisateurs d'un système de communication par téléphonie mobile, et les informations 8 d'enrichissement sont les liens entre les différents messages, et l'historique associé, ce qui permet de lister une suite d'échanges vocaux.

Une vaste gamme d'informations 8 d'enrichissement peut être utilisée.

Il s'agit par exemple d'informations textuelles.

Il peut également s'agir d'informations audio, comme une musique ou un message audio.

Il peut également s'agir d'informations vidéo, comprenant du son. Alternativement, il s'agit d'une image statique associée à du son.

Selon un exemple, un utilisateur souhaite transférer, conjointement à un message audiovisuel initial, une photo, accessible via un lien Internet (de type URL). Les informations 8 d'enrichissement comprennent alors ce lien Internet.

D'autres exemples incluent un numéro de téléphone, une adresse Internet quelconque, un sous-titrage d'un message audio, par exemple pour un destinataire final malentendant, une traduction textuelle d'un message audio, par exemple pour un destinataire final étranger.

D'autres exemples d'informations 8 d'enrichissement incluent la référence d'un autre message vocal, ou des informations complémentaires telles que la géolocalisation de l'utilisateur du terminal émetteur lors de l'envoi, ou toute autre information utile.

Plusieurs informations 8 d'enrichissement, de natures différentes, peuvent être fournies pour un même message 10 initial, par exemple une adresse Internet et un texte explicatif.

De nombreux autres exemples de types d'informations 8 d'enrichissement sont possibles, selon les besoins des utilisateurs et du gestionnaire du système 1 de communication.

La variété des informations 8 d'enrichissement rend complexe une définition simple du traitement à effectuer au niveau du dispositif 3 de réception, par le terminal et/ou par une unité de traitement externe en communication avec le terminal. De lourds investissements seraient nécessaires pour définir chaque traitement, selon la nature et le contenu de l'information 8 d'enrichissement. Un traitement commun à toutes les informations 8 d'enrichissement est possible, par exemple de type affichage brut, mais présente l'inconvénient de ne pas s'adapter de manière optimale à chaque cas.

Pour pallier cette difficulté technique, les informations 8 d'enrichissement sont associées à des informations 9 de traitement, lesdites informations 9 de traitement pouvant être aisément traitées par les dispositifs de transmission et de réception, via les différents moyens de traitement, de conversion, et d'extraction précités.

Ainsi, il n'est pas nécessaire de modifier en profondeur les infrastructures des systèmes 1 de communication pour pouvoir enrichir les messages 10 audiovisuels initiaux. Seuls des moyens de traitement adaptés doivent être insérés au niveau des terminaux et/ou du serveur de communication, voire uniquement reconfigurés, s'ils sont déjà présents.

Les informations 9 de traitement peuvent être fournies dans le serveur 1 de communication de manière similaire à ce qui a été décrit pour les informations 8 d'enrichissement, c'est-à-dire manuellement, via des moyens d'interaction dans le terminal, ou automatiquement, en étant récupérées par le dispositif 2 de transmission à partir de bases de données ou d'applications dédiées.

Les informations 9 de traitement sont liées aux informations 8 d'enrichissement, puisque, comme décrit par la suite, elles caractérisent le traitement requis des informations 8 d'enrichissement au niveau du dispositif 3 de réception.

Des variantes sont cependant possibles liant différentes informations d'enrichissement. Par exemple, l'ordre de ces informations est utilisé afin de traiter une série d'informations (contenus d'enrichissement et traitements correspondants) successifs ou prédéfinis.

Selon un autre exemple, deux informations d'enrichissement peuvent avoir la même chronologie d'application (par exemple deux titres ou sous titres à superposer, ou un sous titre et un fond musical au même moment, ...).

Différents types d'informations 9 de traitement peuvent être utilisés dans le procédé de communication.

Selon un exemple, il s'agit d'informations sur le type d'affichage des informations 8 d'enrichissement à effectuer au niveau du terminal 3 de réception. Il s'agit par exemple de l'indication qu'il faut afficher :
- des sous-titres (qui sont stockés en tant qu'informations 8 d'enrichissement),
- une page Internet dont l'adresse est stockée en tant qu'information 8 d'enrichissement,
- une photo dont l'adresse ou le contenu est stockée en tant qu'information 8 d'enrichissement,
- le nom d'un programme à déclencher, dont le nom ou l'adresse sont stockés en tant qu'information 8 d'enrichissement,
- un numéro de téléphone qu'il convient d'appeler, dont le numéro est stocké en tant qu'information 8 d'enrichissement.

Dans un mode de réalisation, plusieurs informations 9 de traitement sont associées à une même information 8 d'enrichissement, ce qui signifie que plusieurs traitements seront à opérer sur cette information 8 d'enrichissement lors de l'étape de traitement par les moyens 16 de traitement au niveau du dispositif 3 de réception.

Selon un autre exemple, les informations 9 de traitement incluent des informations sur la catégorie d'informations d'enrichissement transmises dans le message 12 audiovisuel enrichi.

Des exemples de catégorie incluent : adresse, numéro de téléphone, numéro bancaire, code, etc. Une même information 8 d'enrichissement peut appartenir à plusieurs catégories, comme par exemple, une adresse Internet et une photo.

Dans un mode de réalisation, les moyens 16 de traitement exploitent l'information 9 de traitement relative à la catégorie des informations d'enrichissement, pour déterminer le traitement à appliquer aux informations 8 d'enrichissement.

Par exemple, une information 8 d'enrichissement de type « adresse Internet », associée à une information 9 de traitement de type « affichage de photo », indique que les moyens 16 de traitement doivent télécharger la photo à partir de l'adresse Internet et l'afficher sur le terminal 3 de réception.

Un avantage de transmettre la catégorie des informations d'enrichissement est de limiter le besoin en termes de quantité d'information d'enrichissement.

Par exemple, la catégorie « adresse Internet » évite de convertir de façon systématique la suite de caractères « http:// », par les moyens 5 de conversion, pour la transmettre. En effet, les moyens 16 de traitement identifient la catégorie « adresse Internet » et ajoutent automatiquement cette extension à l'adresse transmise en tant qu'information 8 d'enrichissement.

Selon un autre exemple de réalisation, les informations 9 de traitement comprennent des informations de paramétrage de l'affichage des informations de traitement à effectuer au niveau du terminal 3 de réception.

Ces informations sont des paramètres définissant l'affichage des informations 9 de traitement à effectuer au niveau du terminal 3 de réception.

Par exemple, il peut s'agir de la couleur de fonte du texte ou d'une partie du texte de l'information d'enrichissement. Dans ce cas, l'information de paramétrage comprend deux valeurs: le type de paramètre (ici la couleur de fonte) et sa valeur (par exemple rouge).

Selon un autre exemple de réalisation, les informations 9 de traitement comprennent des informations sur le déroulement temporel de l'affichage des informations 8 d'enrichissement à effectuer au niveau du terminal 3 de réception.

Il s'agit par exemple d'informations temporelles indiquant la portion du message 10 audiovisuel initial durant laquelle les moyens 16 de traitement doivent afficher l'information 8 d'enrichissement. Un exemple typique concerne le sous-titrage textuel d'un message 10 audio, les informations sur le déroulement temporel permettant de synchroniser l'affichage des sous-titres avec le message 10 audio. Plusieurs informations temporelles peuvent être transmises, et celles-ci peuvent, le cas échéant, se chevaucher.

Les informations 9 de traitement qui ont été citées précédemment ne constituent pas une liste limitative, et d'autres types d'informations 9 de traitement peuvent être transmis. Par exemple, les informations 9 de traitement peuvent comprendre des informations relatives à l'urgence du message, ou à son caractère publicitaire, ou encore des paramétrages liés à la taille de l'écran du terminal de réception, ou au système d'exploitation du terminal de réception.

Dans un mode de réalisation, l'absence d'informations 9 de traitement indique qu'un mode par défaut doit être exécuté au niveau du dispositif 3 de réception. Dans ce cas, le traitement constitue en un affichage constant de l'information 8 d'enrichissement, comme par exemple un sous-titrage intégral et unique.

Selon une variante alternative, pour laquelle les dispositifs 3 de réception sont connectés en permanence au système 1 de communication, les informations 8 d'enrichissement peuvent se limiter à une simple adresse Internet permettant d'accéder à une information 8 d'enrichissement, éventuellement couplée aux informations 9 de traitement correspondantes.

En variante, deux adresses Internet sont transmises, une pour chaque information 8 d'enrichissement et une pour les informations 9 de traitement correspondantes.

Ces dernières variantes présentent une simplicité accrue, mais nécessite de disposer d'un système 1 de communication accessible en permanence.

Pour limiter ces effets, un mode dégradé est possible, combinant ces modes de réalisation. Ainsi, les informations 9 de traitement et/ou 8 d'enrichissement sont transmises via une adresse Internet. En cas d'indisponibilité du réseau 13 de communication, un mode de traitement par défaut est exécuté.

### Etape de "conversion"

Selon la première étape E1, des moyens 5 de conversion permettent à partir d'informations 8 d'enrichissement, et d'informations 9 de traitement, de générer un message 11 multimédia d'insertion qui traduit ces informations. La conversion a été définie plus haut.

Les moyens 5 de conversion sont ceux utilisés dans l'état de la technique, et dépendent de la conversion utilisée.

Selon un mode de réalisation, le codage des informations 8 d'enrichissement peut utiliser un codage de type multifréquences, chaque lettre de l'alphabet pouvant par exemple être définie par une combinaison de fréquences comme pour le code DTMF (*« dual-tone multi-frequency »*). Les moyens 5 de conversion sont donc ici des outils de codage apte à transformer des séquences textuelles en fréquences vocales.

Dans un autre mode de réalisation, les moyens 5 de conversion codent les informations 8 d'enrichissement par des successions de son de durées différentes, à l'image du code morse.

Dans un autre mode de réalisation, les moyens 5 de conversion effectuent un codage de type alphabétique, une synthèse vocale se limitant à épeler les différentes lettres successives d'une information dans la langue voulue (langue fournie en paramètre dans les informations de traitement). Par exemple l'expression "bonjour" se traduit par la suite de phonèmes suivants: "b", "o", "n", "j", "o", "u", et "r".

Dans un autre mode de réalisation encore, les moyens 5 de conversion lisent les informations 8 d'enrichissement dans la langue fournie en paramètre, ce qui permet un codage audio.

Des combinaisons de ces différents codages sont bien entendu possibles.

Dans le cas où les informations 8 d'enrichissement comprennent des informations visuelles statiques ou dynamiques, les moyens de conversion convertissent cette information d'enrichissement et les informations de traitement associées en un message 11 multimédia d'insertion, qui comprend à la fois un contenu vidéo d'insertion et un contenu audio d'insertion.

Le contenu vidéo d'insertion comprend le contenu vidéo de l'information d'enrichissement. Le contenu audio d'insertion comprend le contenu audio de l'information d'enrichissement et le contenu audio codant les informations 9 de traitement, selon le codage décrit ci-dessous.

Concernant les informations 9 de traitement, celles-ci font, selon un mode de réalisation, l'objet d'un codage audio spécifique par les moyens 5 de conversion, afin de pouvoir être reconnues aux étapes d'extraction et de lecture effectuées au niveau du terminal de réception.

Ce codage audio spécifique peut consister en un codage prédéfini, à partir d'une des techniques citées précédemment. Ce code audio spécifique au contenu de ladite information de traitement permet de décoder l'information de traitement lors de l'extraction et de la lecture.

Il peut également consister en une suite de documents sonores, tel que par exemple des notes de musique, ou en variante des notes de musique issues d'un instrument prédéfini (par exemple piano, ou violon), ou encore un refrain spécifique. Il s'agit donc d'un codage audio qui permet de définir de manière univoque le traitement à effectuer.

En variante, les moyens 5 de conversion convertissent les informations 9 de traitement en une combinaison de codes audio et de positionnement de codes. Le positionnement des codes correspond par exemple à une normalisation pour simplifier les traitements (exemple, code 1 pour le traitement, code 2 pour le paramètre de traitement s'il y en a, code 3 pour la chronologie temporelle,..., code 8 pour le contenu d'enrichissement lui-même) et code 9 pour la fin de la séquence d'insertion (et éventuellement le début d'une nouvelle séquence). Si deux codes sont présents successivement, ceci indique l'absence d'informations (si par exemple le code 9 suit directement le code 8, c'est qu'il n'y a pas de contenu d'enrichissement, mais seulement des traitements).

Par exemple, la note musicale "Ré" est utilisée pour indiquer que l'information de traitement exprime le fait que l'information d'enrichissement est un texte.

La note "Ré", suivies de la vocalisation du chiffre "6", indique que la durée correspondante sera de 6 secondes.

Dans un autre exemple, la suite de caractères vocalisés "7", "+", et "4" indique que la durée de l'information 8 d'enrichissement s'étendra de la 7ème à la 11ème seconde du message 10 audiovisuel initial.

Dans un autre exemple encore, la note "Ré", suivie de la vocalisation du chiffre "6", suivie d'un autre refrain spécifique indique que texte sera utilisé en sous titrage durant 6 secondes.

Selon un mode de réalisation, chaque information 9 de traitement transmise par le système 1 de communication est codée selon un code audio spécifique au contenu de ladite information de traitement. Le codage est identique au niveau de l'émission et au niveau de la réception du message 12 enrichi, ce qui facilite le traitement et la lecture au niveau du dispositif 3 de réception.

Selon un autre mode particulier de réalisation de l'invention, les informations de traitement 9 font l'objet d'un codage visuel spécifique par les moyens 5 de conversion. Par exemple, les informations de traitement peuvent être codées sous la forme d'un code 2D interprétable par une application dédiée, par exemple un code de type QR code (pour Quick Response code en anglais). Un QR code est un code matriciel destiné à être lu par un lecteur de code-barres, téléphone ou webcam et pouvant être rapidement décodé par le terminal.

Dans le cas particulier d'informations de paramétrage de l'affichage des informations de traitement à effectuer au niveau du dispositif 3 de réception, celles-ci sont potentiellement très nombreuses, dans la mesure où de nombreux traitements peuvent être effectués au niveau du dispositif 3 de réception par les moyens 16 de traitement. Dans ce cas, une liste de paramètres possibles est stockée dans le système de communication, et c'est l'ordre de cette liste de paramètres qui fait l'objet de la codification (par exemple paramètre 1, paramètre 2, ...) par les moyens 5 de conversion, dans la mesure où lesdits paramètres sont différents d'un traitement à l'autre. Les moyens 16 de traitement, connaissant le traitement à appliquer via d'autres informations de traitement, en déduisent les paramètres à utiliser dans cette liste.

Dans un mode de réalisation, le contenu audio du message 12 enrichi comprend en premier lieu les informations 9 de traitement converties sous forme audio, puis les informations 8 d'enrichissement également converties sous forme audio.

Ainsi, les moyens 5 de conversion convertissent les informations 8 d'enrichissement, destinées à enrichir le contenu du message 10 audiovisuel initial, et les informations 9 de traitement associées aux informations d'enrichissement, en un ou plusieurs messages multimédia d'insertion, de type messages audio et/ou visuel.

Des moyens 6 d'insertion insèrent alors dans le message 10 audiovisuel initial, dans le contenu audio ou visuel de ce message, le message 11 d'insertion. Ces moyens 6 de traitement sont des moyens de type processeur associé à un outil logiciel de manipulation et de découpage de fichiers audio ou visuel. Le cas échéant, si les informations d'enrichissement ou de traitement comprennent des informations visuelles, l'outil logiciel est apte à manipuler des contenus visuels fixes ou dynamiques.

Selon un mode particulier de réalisation de l'invention, lorsque les informations de traitement correspondent à des codes visuels, les informations de traitement sont insérées dans le contenu visuel du message audiovisuel.

Dans un mode de réalisation, les moyens 6 de traitement insèrent le message 11 multimédia d'insertion à une place prédéfinie dans le contenu audio ou visuel du message 10 audiovisuel initial, comme par exemple en début de message.

La Figure 6 est un exemple de réalisation de la conversion d'informations 8, 9 d'enrichissement et de traitement en un message multimédia d'insertion, et de son insertion dans le contenu audio d'un message 10 initial.

Les informations 8 d'enrichissement sont dans cet exemple des sous-titres d'un message 10 audio ou audiovisuel initial.

Les informations 9 de traitement indiquent le positionnement temporel et la durée d'affichage de ces sous-titres, par rapport au message 10 audio initial.

Les moyens 5 de conversion convertissent les informations 8, 9 d'enrichissement et de traitement en un message 11 audio d'insertion, que les moyens 6 de traitement accolent au début du contenu du message 10 audiovisuel initial, afin de créer un message 12 audio enrichi.

Les moyens 6 de traitement encadrent le contenu audio du message 11 multimédia d'insertion par des balises 19 audio de séparation, en l'occurrence une balise initiale 19₁ et une balise finale 19₂. Ces balises audio sont des repères audio indiquant le début et à la fin du message 11 audio d'insertion.

Dans ce mode de réalisation, le message 11 audio d'insertion est composé, à son début, d'une séquence audio relative aux informations 9 de traitement, suivie d'une séquence audio relative aux informations 8 d'enrichissement. Ces séquences audio sont également séparées par une balise audio 19₃, afin de supprimer toute erreur d'extraction ou de lecture par le dispositif 3 de réception.

Avantageusement, les moyens 5 de conversion convertissent les informations 9 de traitement, de sorte que celles-ci soient codées sous la forme d'une succession ordonnée et prédéfinie. Ceci permet également de de supprimer toute erreur d'extraction ou de lecture par le dispositif 3 de réception.

Dans cet exemple, la séquence audio relative aux informations 9 de traitement comprend en premier lieu des codes 9₁ audio relatifs au type de traitement, puis à la catégorie 9₂ des informations de traitement, puis au paramétrage 9₃ de l'affichage des informations de traitement, puis des informations 9₄ sur le déroulement temporel de l'affichage des informations d'enrichissement à effectuer au niveau du dispositif 3 de réception. Chacune de ces rubriques d'informations 9 de traitement se termine par une balise audio spécifique (19₄, 19₅, 19₆) éventuellement identique, la dernière balise étant la balise de fin de la sous séquence audio d'informations 9 de traitement. Dans ce mode de réalisation, c'est l'ordre des balises et le nombre des balises qui peut être figé et normalisé, ce qui permettra de déterminer directement au niveau du dispositif de réception les traitements à appliquer.

Dans un mode de réalisation, si une des rubriques des informations 9 de traitement était absente pour une raison ou une autre, les balises audio correspondantes sont insérées dans le message 11 audio d'insertion, mais ne sont précédées par aucune information audio relative à cette rubrique.

Cette organisation des enchaînements évite la multiplication des codes audio.

Dans un mode de réalisation, le même code audio (par exemple un code multifréquences alphabétique ou DTMF) est utilisé pour coder le traitement "affichage d'une photo" et pour coder le type d'informations "texte". Aucune confusion n'est possible pour l'encodage ou la lecture étant donné que le premier code audio suit la première balise d'insertion 19₁, et que le second suit une autre balise d'insertion 19₄. Cet ordre peut donc être normalisé entre les dispositifs d'émission et de réception, ainsi que le nombre d'informations de traitement fournies de façon systématique, même si ces informations sont absentes.

Dans un mode de réalisation, le message 12 enrichi comprend, par exemple en en-tête, une pluralité de messages audio d'insertion.

### Etape d'insertion

Des moyens 6 d'insertion insèrent le message 11 multimédia d'insertion au moins dans le contenu audio du message 10 audio ou audiovisuel initial.

Cette insertion d'une séquence audio au sein d'une autre séquence audio est réalisée à l'aide d'un simple outil logiciel de montage audio.

Si le message 11 d'insertion est un message audiovisuel, la partie visuelle de ce message est insérée dans le contenu visuel du message initial, et la partie sonore est insérée dans le contenu audio du message initial. Le cas échéant, des balises visuelles entourent la partie visuelle du message d'insertion, afin de faciliter son extraction ultérieure.

Dans un mode de réalisation, chaque message 11 multimédia d'insertion est inséré dans le message 10 audiovisuel initial à un instant temporel qui correspond à la future position temporelle de l'effet recherché pour cette information 8 d'enrichissement lors de la lecture au niveau du terminal 3 de réception.

Ainsi, un message 11 audio d'insertion correspondant à un futur sous titrage à partir de la seconde 6 sera inséré à partir de la seconde 6 du message 10 audiovisuel initial.

Un avantage est d'éviter la nécessité de stocker cette information 9 particulière de traitement au sein du message 12 enrichi.

Un autre avantage est de pouvoir proposer de façon automatisée, et sans aucune modification des bases de données des serveurs de messageries vocales des différents opérateurs, des fonctionnalités de type réponses sur messages reçus, ou réponses avec corrections sur messages reçus.

Dans un tel cas d'usage, les informations 8 d'enrichissement sont des informations de type horodatage des envois initiaux des messages, coordonnées des émetteurs, ou autres. Les informations 9 de traitement permettent le rappel des émetteurs depuis les terminaux de réception et permettent de définir l'affichage différencié des composantes vocales sur le terminal de réception.

Dans le cadre de cet usage, chaque composante vocale (par exemple, un message auquel on répond vocalement, et l'ensemble message initial et réponse vocale du destinataire) est concaténée sans modifier son historique, et les messages 11 multimédia d'insertion sont donc par défaut répartis sur l'ensemble du message 12 enrichi.

Selon une autre variante, les messages 11 multimédia d'insertion sont tous positionnés les uns après les autres, d'une part en fonction de leur caractère générique, d'autre part en fonction de leur chronologie, avant ou après le contenu audio du message 10 audiovisuel initial. Le même procédé s'applique à des informations visuelles. Cette variante permet de récupérer simplement ces informations lors de l'étape d'extraction, en les tronquant directement, sans avoir à traiter l'ensemble du message 12 enrichi. Le caractère générique s'entend comme une information 8 d'enrichissement qui caractérise l'ensemble du message 10 initial audio ou audiovisuel, par rapport à celles ne caractérisant qu'une partie de ce message.

Selon une variante, chaque message 11 audio d'insertion est délimité par des balises audio, permettant de le distinguer du message audiovisuel initial, en début et/ou en fin, selon les cas.

Le fichier audio résultant est ensuite enregistré selon l'état de l'art.

Selon une variante, le fichier audio résultant fait l'objet d'un nouveau fichier, séparé du fichier audio cible d'origine du message 10 audiovisuel initial.

Ce double enregistrement présente plusieurs intérêts. D'une part, ceci permet une utilisation du procédé pour mettre en œuvre des fonctionnalités de type réponses sur messages vocaux reçus.

D'autre part, tous les dispositifs de réception ne possèdent pas nécessairement les capacités de traitement nécessaires.

Dans un mode de réalisation, l'envoi du message 10 audiovisuel enrichi comprend une étape de vérification de la compatibilité avec le dispositif 3 de réception par le système 1 de communication. En cas d'incompatibilité, seul le message 10 audiovisuel initial est envoyé.

Dans un mode de réalisation, chaque message 12 audio d'insertion transmis par le système 1 de communication comprend une succession ordonnée prédéfinie d'informations 9 de traitement et d'informations 8 d'enrichissement. Par exemple, les informations de traitement sont codées en premier, puis viennent les informations d'enrichissement. Dans les informations de traitement, un ordre prédéfini peut également être respecté selon le contenu ou le type des informations de traitement.

### Etape de communication

Le message 12 enrichi est communiqué, par le système 1 de communication, d'un dispositif 2 d'émission vers au moins un dispositif 3 de réception. Les moyens de communication sont classiques : antennes, antennes relais, communication par Internet, réseau Bluetooth, fibres optiques, etc.

Si le système 1 de communication est un système de téléphonie mobile, le message 12 enrichi est transmis selon les techniques courantes de l'état de l'art. L'utilisateur du dispositif 3 de réception récupère le message, par exemple, sur sa boîte vocale. En variante, le message est communiqué dans l'espace réservé aux messages d'accueil sur la boîte vocale de l'utilisateur.

Dans un mode de réalisation, le message 12 audiovisuel enrichi est récupéré à l'aide d'une messagerie vocale visuelle (VVM - Visual Voice Mail), à partir de laquelle l'utilisateur visualise le liste des messages qui lui sont destinés.

En variante, une application spécifique, par exemple téléchargée par le destinataire utilisateur d'un terminal 3 de réception depuis un magasin d'application (Apple store, Android Market, ...) est nécessaire pour récupérer puis traiter ledit message 12 audiovisuel enrichi depuis le serveur de messagerie vocale de l'utilisateur.

### Etape d'extraction

Après la réception du message 12 audiovisuel enrichi par le dispositif 3 de réception, des moyens 15 d'extraction extraient les informations d'enrichissement et les informations de traitement du message audiovisuel enrichi reçu par le terminal de réception.

Il s'agit du traitement inverse de l'étape d'insertion.

Dans un mode de réalisation, cette étape et les étapes successives sont déclenchées lorsque l'utilisateur sélectionne le message voulu dans une liste de messages reçus.

En variante, lesdites étapes sont déclenchées dès qu'un nouveau message est disponible dans la liste des messages reçus au niveau du terminal de réception.

Pour éviter que ces étapes ne soient répétées de nombreuses fois, les messages préalablement traités peuvent être marqués comme "fait" au niveau du terminal de réception, afin d'éviter les traitements redondants.

Les moyens 15 d'extraction identifient le contenu audio du message 11 multimédia d'insertion à l'aide des balises sonores.

Les moyens 15 d'extraction sont utilisés pour séparer le contenu audio du message 11 multimédia d'insertion du contenu audio du message 10 audiovisuel initial.

Dans le cas où des informations 9 d'enrichissement visuelles ont été insérées dans le contenu vidéo du message audiovisuel initial, les moyens 15 d'extraction extraient également ce contenu.

La reconnaissance des balises audio délimitant un message audio d'insertion, ou en variante la série des messages audio d'insertion, nécessite un composant de comparaison audio, par exemple un composant de comparaison des spectres audio.

Le cas échéant, la reconnaissance des balises visuelles délimitant un message visuel d'insertion, nécessite un composant de comparaison visuelle.

Dans la variante selon laquelle les messages 11 multimédia d'insertion sont positionnés selon différents instants temporels dans le message audio cible d'origine, les moyens 15 d'extraction conservent en outre l'information relative à l'instant temporel de début du chaque message 11 multimédia d'insertion.

Les moyens 15 d'extraction permettent en outre, pour chacun des messages multimédia 11 d'insertion récupérés à l'issue de l'étape précédente, d'analyser ladite séquence afin d'en extraire les informations d'enrichissement et les informations de traitement.

Les fonctions opérées par ces moyens 15 d'extraction dépendent des choix effectués en amont pour la conversion des informations.

Si le codage audio des informations d'enrichissement consiste en une synthèse vocale lettre à lettre dans une langue prédéfinie, ou en variante transmise en paramètre, les moyens 15 d'extraction comprennent un composant de reconnaissance vocale lettre à lettre dans la langue prédéterminée (ou en variante si cette dernière a été transmise en paramètre de traitement, une fois cette dernière déterminée).

L'avantage du lettre à lettre est bien entendu le haut niveau de fiabilité de la méthode, supérieur à la reconnaissance vocale plein texte (prononciation directe des mots - et non des lettres).

Si un codage multifréquences alphabétique ou DTMF a été utilisé, les moyens 15 d'extraction reconnaissent et interprètent lesdits codes, afin d'en ressortir les textes correspondants.

Il en va de même si tout ou partie du codage audio utilisé est composé de notes de musiques prédéfinies, ou en variante de refrains audio prédéfinis.

Les moyens 15 d'extraction sont notamment configurés pour distinguer les balises sonores de début et de fin des différentes séquences sonores du message audio d'insertion (balises séparant les informations de traitement des informations d'enrichissement, et balises séparant les informations de traitement entre elles), et, le cas échéant, pour distinguer les balises visuelles.

Au final, les moyens 15 d'extraction fournissent un ensemble d'informations composées d'informations d'enrichissement et des différentes informations de traitement relatives à ces informations d'enrichissement.

Chacun desdits groupes d'informations est relié à un message audiovisuel initial.

En outre, à l'issue de l'étape d'extraction, le dispositif 3 de réception dispose du message 10 audiovisuel initial, conforme à ce qu'il était avant l'insertion des messages audio d'insertion.

### Etape de lecture

Des moyens 24 de lecture sont configurés pour lire le message audiovisuel initial, et des moyens 16 de traitement sont configurés pour traiter les informations 8 d'enrichissement, le traitement des informations d'enrichissement étant déterminé en fonction des informations de traitement extraites du message audiovisuel enrichi, et associées aux informations d'enrichissement, et ce au niveau du dispositif 3 de réception.

Par exemple, des informations de sous-titrage successives, (éventuellement plusieurs informations de sous-titrage dans différentes langues) seront affichées successivement selon le déroulement temporel voulu au fur et à mesure du déroulement de l'écoute dudit message 10 audiovisuel cible.

Selon un autre exemple, un message vocal composé de différentes séquences vocales successives sera affiché selon une arborescence distinguant les différentes séquences vocales successives, avec en regard desdites séquences vocales successives les informations d'horodatage et de coordonnées de leurs émetteurs respectifs.

Selon un autre exemple, une série de photos, avec éventuellement des sous titrages et un défilement suivant un scénario, est présentée au fur et à mesure de l'écoute du message, de façon synchronisée avec le déroulement dudit message.

Une infinité d'exemples de réalisation sont possibles.

Les moyens 16 de traitement disposent d'un processeur et d'un outil logiciel permettant d'interpréter les informations de traitement, afin de lire les informations d'enrichissement comme cela est attendu par l'émetteur du message audiovisuel initial.

Les moyens 16 de traitement reconnaissent la nature et le contenu des informations 9 de traitement grâce à leur codage audio prédéfini, comme cela a été décrit précédemment. Ils disposent donc d'une mémoire stockant le codage prédéfini de chaque information de traitement, et le traitement à mettre en œuvre pour chaque information.

### Sécurisation des échanges

Plusieurs variantes d'architecture peuvent être mises en œuvre afin de sécuriser le procédé relativement à la perte de données. Ces pertes de données peuvent notamment être liées à la qualité du réseau, ou au codage de la bande audio lors de la transmission des données.

Dans un mode de réalisation, les moyens 5 de conversion ajoutent une sous-séquence audio de contrôle dans le message 12 audiovisuel enrichi, par exemple à sa fin. Cette sous-séquence de contrôle contient des informations relatives par exemple au nombre de caractères définis dans les informations 8 d'enrichissement du message audiovisuel enrichi, ce qui permet, après extraction, de vérifier si le transfert d'informations s'est correctement réalisé.

Dans un autre mode de réalisation, chaque séquence d'insertion correspondant au codage des informations d'enrichissement ou de traitement est doublée en utilisant deux codages d'informations distincts. Après extraction au niveau du dispositif de réception, les données des deux séquences d'insertion relatives au même codage d'information sont comparées pour vérifier s'il n'y a pas d'erreur.

En cas d'erreur décelée, selon une première variante, l'étape de lecture du message 10 audiovisuel initial accompagné des informations 8 d'enrichissement n'est pas mise en œuvre.

Selon une autre variante, l'étape de lecture est mise en œuvre de façon dégradée, un message d'alerte étant en outre affiché signalant une anomalie probable.

### Exemples d'application

Le procédé de communication permet d'enrichir des messages audio ou audiovisuel sans modifier l'infrastructure des systèmes de communication. Il peut être surajouté aux infrastructures existantes.

Le procédé s'applique notamment aux systèmes de communication des opérateurs de téléphonie, et en particulier, aux serveurs de messagerie vocale.

En particulier, le procédé permet d'enrichir les messages vocaux par un grand nombre d'informations, comme par exemple des informations textuelles. Le procédé permet également d'exploiter le potentiel desdites informations d'enrichissement à l'aide de différents traitements appropriés, sans aucune modification nécessaire des infrastructures de messageries vocales sous-jacentes. Une modification des bases de données, afin d'atteindre des résultats similaires, impliquerait des coûts et des délais d'implémentation très élevés.

Le procédé peut également être mis en œuvre pour d'autres systèmes de diffusion de documents audio ou audiovisuels, comme par exemple des podcasts radio diffusés vers des terminaux intelligents.

## Revendications

1. Procédé de réception d'un message audio ou audiovisuel enrichi (12) mis en œuvre par un dispositif de réception (3), comprenant les étapes consistant à :
- extraire depuis un contenu audio ou visuel du message (12) audio ou audiovisuel enrichi reçu (E4) au moins un message multimédia d'insertion (11) contenant des informations (8) d'enrichissement et des informations (9) de traitement, et un message audio ou audiovisuel initial (10), séparé du message d'insertion (11) par une balise de séparation (19₁, 19₂) ;
- lire le message audio ou audiovisuel initial (10), et,
- traiter les informations (8) d'enrichissement, de sorte à enrichir la lecture ou la présentation du message (10) audio ou audiovisuel initial avec lesdites informations (8) d'enrichissement,
le traitement des informations (8) d'enrichissement étant déterminé en fonction des informations (9) de traitement contenues dans le message multimédia d'insertion (11).

2. Procédé de réception selon la revendication 1, dans lequel les informations (9) de traitement comprennent :
- des informations sur la catégorie d'informations d'enrichissement transmises dans le message audiovisuel enrichi, et/ou
- des informations de paramétrage de l'affichage des informations d'enrichissement à effectuer au niveau du terminal de réception.

3. Procédé de réception selon l'une des revendications 1 à 2, dans lequel les informations (8) d'enrichissement comprennent un lien vers une adresse accessible via un réseau de communication.

4. Procédé de réception selon l'une des revendications 1 à 3, dans lequel l'extraction du message (11) multimédia d'insertion depuis un contenu audio ou visuel du message (12) audio ou audiovisuel enrichi comprend l'extraction d'au moins une balise audio ou visuelle de séparation entre le message (11) multimédia d'insertion et le contenu audio ou visuel du message (10) audio ou audiovisuel initial.

5. Procédé de réception selon l'une des revendications 1 à 4, dans lequel le message (12) enrichi reçu par le dispositif de réception comprend une succession ordonnée prédéfinie d'informations (9) de traitement et d'informations (8) d'enrichissement.

6. Procédé de réception selon l'une des revendications 1 à 5, dans lequel les informations (9) de traitement sont codées selon un code audio ou visuel lié au contenu desdites informations de traitement.

7. Dispositif de réception d'un message audio ou audiovisuel enrichi (12), comprenant :
- des moyens pour extraire du message (12) enrichi reçu (E4) au moins un message multimédia d'insertion (11) contenant des informations (8) d'enrichissement et des informations (9) de traitement, et un message audio ou audiovisuel initial (10), séparé du message d'insertion (11) par une balise de séparation (19₁, 19₂),
- des moyens pour lire le message audio ou audiovisuel initial (10), et,
- des moyens pour traiter les informations (8) d'enrichissement, de sorte à enrichir la lecture ou la présentation du message (10) audio ou audiovisuel initial avec lesdites informations (8) d'enrichissement,
le traitement des informations (8) d'enrichissement étant déterminé en fonction des informations (9) de traitement contenues dans le message multimédia d'insertion (11).

8. Terminal comprenant un dispositif selon la revendication 7.

9. Programme d'ordinateur comportant des instructions pour l'exécution du procédé de réception selon l'une quelconque des revendications 1 à 6, lorsque le programme est exécuté par un processeur.

10. Support d'enregistrement lisible par un processeur sur lequel est enregistré un programme comportant des instructions pour l'exécution du procédé de réception selon l'une quelconque des revendications 1 à 6.

## Patentansprüche

1. Empfangsverfahren für eine angereicherte Audio- oder audiovisuelle Nachricht (12), das von einer Empfangsvorrichtung (3) ausgeführt wird und das die folgenden Schritte beinhaltet:
- Extrahieren (E4), aus einem Audio- oder visuellen Inhalt der empfangenen angereicherten Audio- oder audiovisuellen Nachricht (12), mindestens einer Multimedia-Einfügenachricht (11), die Anreicherungsinformationen (8) und Verarbeitungsinformationen (9) enthält, und einer ursprünglichen Audio- oder audiovisuellen Nachricht (10), die durch ein Trennungs-Tag (19₁, 19₂) von der Einfügenachricht (11) getrennt ist;
- Lesen der ursprünglichen Audio- oder audiovisuellen Nachricht (10) und
- Verarbeiten der Anreicherungsinformationen (8), um die Lektüre oder die Präsentation der ursprünglichen Audio- oder audiovisuellen Nachricht (10) mit den Anreicherungsinformationen (8) anzureichern,
wobei die Verarbeitung der Anreicherungsinformationen (8) in Abhängigkeit von den in der Multimedia-Einfügenachricht (11) enthaltenen Verarbeitungsinformationen (9) bestimmt wird.

2. Empfangsverfahren nach Anspruch 1, wobei die Verarbeitungsinformationen (9) Folgendes beinhalten:
- Informationen über die Kategorie von in der angereicherten audiovisuellen Nachricht übertragenen Anreicherungsinformationen und/oder
- Informationen für die Parametrierung der am Empfangsendgerät durchzuführenden Anzeige der Anreicherungsinformationen.

3. Empfangsverfahren nach einem der Ansprüche 1 bis 2, wobei die Anreicherungsinformationen (8) eine Verknüpfung zu einer Adresse, die über ein Kommunikationsnetz erreichbar ist, beinhalten.

4. Empfangsverfahren nach einem der Ansprüche 1 bis 3, wobei das Extrahieren der Multimedia-Einfügenachricht (11) aus einem Audio- oder visuellen Inhalt der angereicherten Audio- oder audiovisuellen Nachricht (12) das Extrahieren mindestens eines Audio- oder visuellen Trennungs-Tags zwischen der Multimedia-Einfügenachricht (11) und dem Audio- oder visuellen Inhalt der ursprünglichen Audio- oder audiovisuellen Nachricht (10) beinhaltet.

5. Empfangsverfahren nach einem der Ansprüche 1 bis 4, wobei die von der Empfangsvorrichtung empfangene angereicherte Nachricht (12) eine vordefinierte geordnete Folge von Verarbeitungsinformationen (9) und Anreicherungsinformationen (8) beinhaltet.

6. Empfangsverfahren nach einem der Ansprüche 1 bis 5, wobei die Verarbeitungsinformationen (9) gemäß einem Audio- oder visuellen Code codiert sind, der mit dem Inhalt der Verarbeitungsinformationen verknüpft ist.

7. Empfangsvorrichtung für eine angereicherte Audio- oder audiovisuelle Nachricht (12), die Folgendes beinhaltet:
- Mittel zum Extrahieren (E4), aus der empfangenen angereicherten Nachricht (12), mindestens einer Multimedia-Einfügenachricht (11), die Anreicherungsinformationen (8) und Verarbeitungsinformationen (9) enthält, und einer ursprünglichen Audio- oder audiovisuellen Nachricht (10), die durch ein Trennungs-Tag (19₁, 19₂) von der Einfügenachricht (11) getrennt ist,
- Mittel zum Lesen der ursprünglichen Audio- oder audiovisuellen Nachricht (10) und
- Mittel zum Verarbeiten der Anreicherungsinformationen (8), um die Lektüre oder die Präsentation der ursprünglichen Audio- oder audiovisuellen Nachricht (10) mit den Anreicherungsinformationen (8) anzureichern,
wobei die Verarbeitung der Anreicherungsinformationen (8) in Abhängigkeit von den in der Multimedia-Einfügenachricht (11) enthaltenen Verarbeitungsinformationen (9) bestimmt wird.

8. Endgerät, das eine Vorrichtung nach Anspruch 7 beinhaltet.

9. Computerprogramm, das Anweisungen für die Ausführung des Empfangsverfahrens nach einem der Ansprüche 1 bis 6 beinhaltet, wenn das Programm von einem Prozessor ausgeführt wird.

10. Von einem Prozessor lesbares Aufzeichnungsmedium, auf dem ein Programm aufgezeichnet ist, das Anweisungen für die Ausführung des Empfangsverfahrens nach einem der Ansprüche 1 bis 6 beinhaltet.

## Claims

1. Method of receiving an enriched audio or audiovisual message (12) implemented by a reception device (3), comprising the steps consisting in:
- extracting from an audio or visual content of the enriched audio or audiovisual message (12) received (E4) at least one insertion multimedia message (11) containing enrichment information (8) and processing information (9), and an initial audio or audiovisual message (10), separated from the insertion message (11) by a separation tag (19₁, 19₂);
- reading the initial audio or audiovisual message (10), and,
- processing the enrichment information (8), so as to enrich the reading or the presentation of the initial audio or audiovisual message (10) with said enrichment information (8),
the processing of the enrichment information (8) being determined as a function of the processing information (9) contained in the insertion multimedia message (11).

2. Method of receiving according to Claim 1, in which the processing information (9) comprises:
- information on the category of enrichment information transmitted in the enriched audiovisual message, and/or
- information in respect of parametrization of the display of the enrichment information to be performed at the level of the reception terminal.

3. Method of receiving according to one of Claims 1 to 2, in which the enrichment information (8) comprises a link to an address accessible via a communication network.

4. Method of receiving according to one of Claims 1 to 3, in which the extraction of the insertion multimedia message (11) from an audio or visual content of the enriched audio or audiovisual message (12) comprises the extraction of at least one audio or visual separation tag for separating between the insertion multimedia message (11) and the audio or visual content of the initial audio or audiovisual message (10).

5. Method of receiving according to one of Claims 1 to 4, in which the enriched message (12) received by the reception device comprises a predefined ordered succession of processing information (9) and of enrichment information (8).

6. Method of receiving according to one of Claims 1 to 5, in which the processing information (9) is coded according to an audio or visual code linked to the content of the said processing information.

7. Device for receiving an enriched audio or audiovisual message (12), comprising:
- means for extracting from the enriched message (12) received (E4) at least one insertion multimedia message (11) containing enrichment information (8) and processing information (9), and an initial audio or audiovisual message (10), separated from the insertion message (11) by a separation tag (19₁, 19₂),
- means for reading the initial audio or audiovisual message (10), and,
- means for processing the enrichment information (8), so as to enrich the reading or the presentation of the initial audio or audiovisual message (10) with said enrichment information (8),
the processing of the enrichment information (8) being determined as a function of the processing information (9) contained in the insertion multimedia message (11).

8. Terminal comprising a device according to Claim 7.

9. Computer program comprising instructions for the execution of the method of receiving according to any one of Claims 1 to 6 when the program is executed by a processor.

10. Recording medium readable by a processor on which is recorded a program comprising instructions for the execution of the method of receiving according to any one of Claims 1 to 6.
